# EUROPEAN PATENT APPLICATION

(11) **EP 1 722 486 A1**
(43) Date of publication of application: **15.11.2006**
(21) Application number: 05703983.6
(22) Date of filing: 21.01.2005
(51) Int. Cl.: H04B 1/40

(54) **ISOLATION TRAP CIRCUIT, ANTENNA SWITCH MODULE AND TRANSMISSION CIRCUIT**

(30) Priority: 01.03.2004 JP 2004055787
(71) Applicant: SANYO ELECTRIC CO., LTD., Moriguchi-shi, Osaka 570-8677 (JP)
(72) Inventor: MAEDA, Shingo, Higashiosaka-shi, Osaka 5770002 (JP)
(74) Representative: Roberts, Peter David
(86) International application number: PCT/JP2005/000762
(87) International publication number: WO 2005/083893

(57) **Abstract**

In an isolation trap circuit of the present invention, a PIN diode PD and an inductor L are connected in parallel to a first terminal 61, and a capacitor C1 is connected in series to the inductor L, while the PIN diode PD and the capacitor C1 are connected in parallel to a second terminal 62. The isolation trap circuit is **characterized in that** a capacitor C2 is further connected and grounded between the first terminal 61 and the inductor L, or between the inductor L and the capacitor C1, or between the capacitor C1 and the second terminal 62.

## Description

### TECHNICAL FIELD

The present invention relates to an isolation trap circuit included in an electric circuit of a portable terminal device such as a portable telephone adapted to select a band among dual bands, triple bands, or more, in other words, used in a plurality of communication systems, an antenna switch module including the isolation trap circuit, and a transmission circuit including the antenna switch module.

### BACKGROUND ART

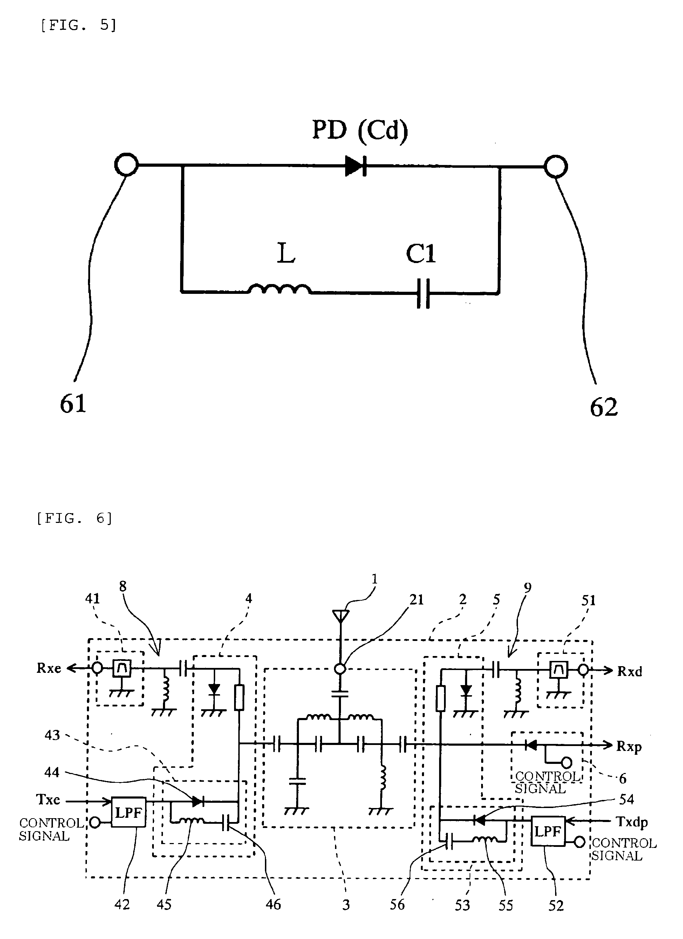

FIG. 6 shows a configuration of a conventional antenna switch module 2. With a common antenna 1 connected to an antenna connecting terminal 21, the antenna switch module 2 is capable of transmitting and receiving signals of triple bands, i.e., three communication systems of DCS (Digital Cellular System) employing a 1800 MHz band used in Europe, PCS (Personal Communication Services) employing a 1900 MHz band used in North America, and EGSM (Extended Global System For Mobile Communications) employing a 900 MHz band used in Europe and other places (for example, Patent Document 1).

The antenna switch module 2 shown in FIG. 6 is modularized using a laminated ceramic substrate. A first circuit 8 and a second circuit 9 are connected in parallel to the antenna connecting terminal 21 through a diplexer 3.

In the first circuit 8, a low-frequency SAW filter 41 and a low-frequency low-pass filter 42 are connected in parallel to a low-frequency switching circuit 4. A received signal Rxe of EGSM is output from the low-frequency SAW filter 41, while a transmission signal Txe of EGSM is fed to the low-frequency low-pass filter 42.

In the second circuit 9, a high-frequency SAW filter 51, a triple-band adaptive circuit 6, and a high-frequency low-pass filter 52 are connected in parallel to a high-frequency switching circuit 5. A received signal Rxd of DCS is output from the high-frequency SAW filter 51, and a received signal Rxp of PCS is output from the triple-band adaptive circuit 6. A transmission signal Txdp of DCS or PCS is fed to the high-frequency low-pass filter 52.

The low-frequency switching circuit 4 is provided with an isolation trap circuit 43 including a PIN diode 44, an inductor 45, and a capacitor 46. Similarly, the high-frequency switching circuit 5 is provided with an isolation trap circuit 53 including a PIN diode 54, an inductor 55, and a capacitor 56. A function of the isolation trap circuit is described with reference to FIG. 5. When a transmission signal of any one of communication systems of EGSM, DSC, and PCS is being transmitted through the corresponding first or second circuit, the PIN diode PD included in the isolation trap circuit provided in the other circuit turns off. The isolation trap circuit makes a trap with a capacity Cd of the PIN diode PD at this time and the inductor L in parallel therewith. The capacitor C1 is for cutting DC components.
Patent Document 1: JP 2002-246809, A

### DISCLOSURE OF THE INVENTION

### PROBLEM TO BE SOLVED BY THE INVENTION

Because higher harmonics are generated in a transmission circuit, suppression of higher harmonics must be ensured in an antenna switch module in order to prevent the higher harmonics from being emitted from an antenna. In a circuit having two or more bands such as dual bands, triple bands, etc., not only higher harmonics in a circuit for one band are suppressed, but also higher harmonics leaking from a circuit for another band are suppressed.

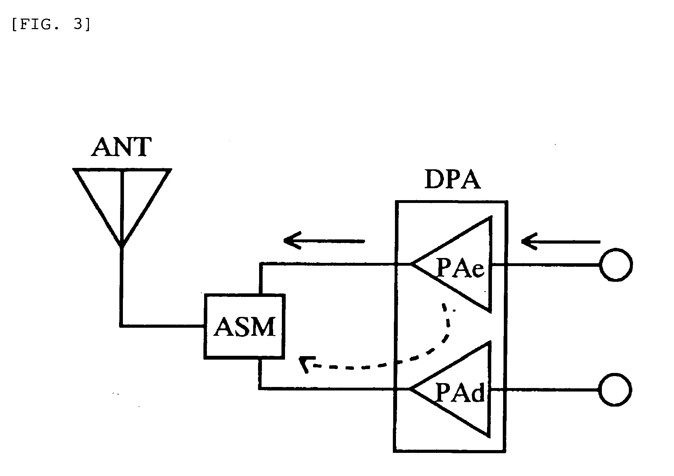

Portable terminal devices such as portable telephones in recent years have been developed to be small-sized and light-weighted due to a demand from the market. Accordingly, a circuit board contained inside a portable terminal device has also become space-saving and small-sized, and electronic components are mounted at high density on the circuit board. FIG. 3 illustrates a block diagram of a transmission circuit of a dual-band portable terminal device using a dual power amp DPA for space saving usable in the two bands of EGSM and DCS. A power amp PAe for EGSM and a power amp PAd for DCS are formed adjacently in the dual power amp DPA. Therefore, when an EGSM signal is transmitted as indicated by solid arrows, for example, higher harmonics of the EGSM signal can leak from the power amp PAe for EGSM into the power amp PAd for DCS as indicated by a dotted arrow to enter into an antenna switch module ASM. Thus, there is a problem that higher harmonics of a signal of one band are highly likely to leak into the antenna switch module ASM through a signal path of the other band.

Accordingly, an object of the present invention is to provide, in a portable terminal device such as a portable telephone adapted to select a band among dual bands, triple bands, or more, in other words, used in a plurality of communication systems, an isolation trap circuit in which even if higher harmonics of a transmission signal of one band leak into a signal path of another band, the higher harmonics can be suppressed, an antenna switch module including the isolation trap circuit, and a transmission circuit including the antenna switch module.

### MEANS FOR SOLVING THE PROBLEM

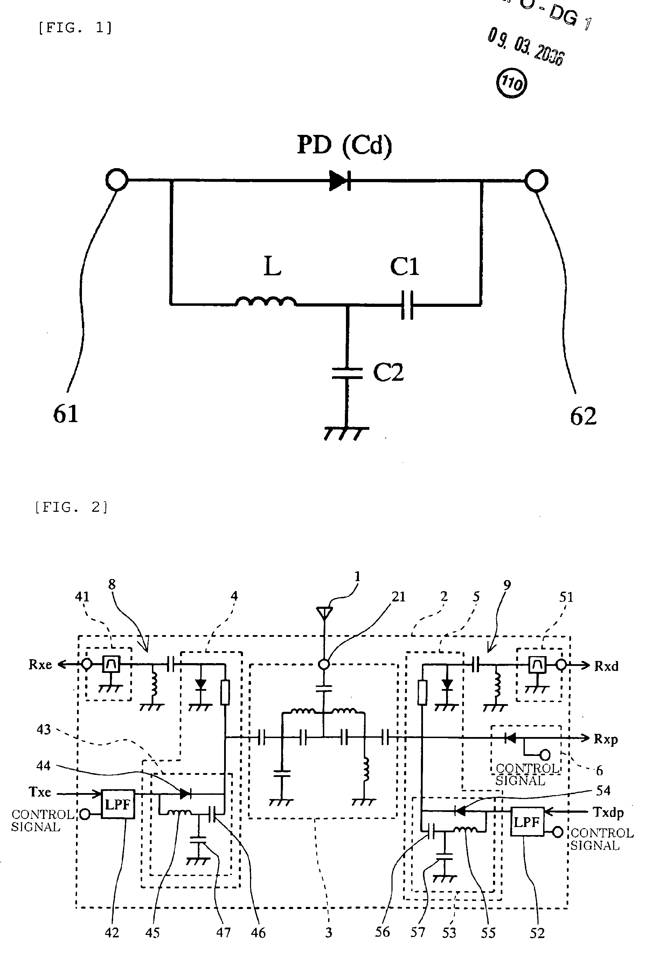

As shown in FIG. 1, an isolation trap circuit of the present invention is characterized in that a capacitor is connected and grounded to the conventional isolation trap circuit. That is to say, a PIN diode PD and an inductor L are connected in parallel to a first terminal 61, and a capacitor C1 is connected in series to the inductor L, while the PIN diode PD and the capacitor C1 are connected in parallel to a second terminal 62, with a capacitor C2 further connected and grounded between the first terminal 61 and the inductor L, or between the inductor L and the capacitor C1, or between the capacitor C1 and the second terminal 62. As seen, FIG. 1 illustrates the capacitor C2 connected and grounded between the inductor L and the capacitor C1.

An antenna switch module of the present invention included in a portable terminal device used in a plurality of communication systems includes a first circuit for transmitting a transmission signal of a first communication system, a second circuit for transmitting a transmission signal of a second communication system, and a diplexer to be provided between the first circuit, the second circuit, and an antenna, and is characterized in that the isolation trap circuit of the present invention is provided in the first circuit and/or the second circuit.

The antenna switch module of the present invention included in a portable terminal device used in a plurality of communication systems may include a first circuit for transmitting a transmission signal of a first communication system and for receiving a reception signal of the first communication system, a second circuit for transmitting a transmission signal of a second communication system and for receiving a reception signal of the second communication system, and a diplexer to be provided between the first circuit, the second circuit, and an antenna, with the isolation trap circuit of the present invention provided in the first circuit and/or the second circuit.

A transmission circuit of the present invention includes a dual power amp for amplifying a transmission signal of a first communication system and a transmission signal of a second communication system, and the antenna switch module of the present invention.

### EFFECT OF THE INVENTION

In the conventional isolation trap circuit, a trap is made with a capacity Cd of the PIN diode PD and the inductor L in parallel therewith when the PIN diode PD is off. In the isolation trap circuit of the present invention, a capacitor C2 is additionally connected and grounded between the first terminal 61 and the inductor L, or between the inductor L and the capacitor C1, or between the capacitor C1 and the second terminal 62, so that the inductor L and the capacitor C2 function as a resonator. Isolation in a desirable band can be therefore increased when the capacitor C2, the inductor L, and the capacitor C1 are appropriate constants.

Unnecessary signals can be suppressed if the isolation trap circuit of the present invention is provided in an antenna switch module. An example is a dual-band portable terminal device usable in the two bands (two communication systems) of EGSM and DCS. The isolation trap circuit of FIG. 1 is provided in an EGSM switching circuit and a DCS switching circuit. A diode in a DCS isolation trap circuit turns off, for example, when an EGSM signal is transmitted. Even if higher harmonics of the EGSM signal leak into a DCS signal path, the higher harmonics of the EGSM signal can be suppressed to a desirable level because the isolation trap circuit of the present invention is provided in the DCS switching circuit. Thus, even if higher harmonics of a signal of one band leak into the antenna switch module ASM through a signal path of another band, the isolation trap circuit provided in a switching circuit of the another band can suppress the higher harmonics of the signal of the one band.

If the antenna switch module of the present invention is provided in a transmission circuit including a dual power amp, high-level higher harmonics leaking from the dual power amp into the antenna switch module can be suppressed.

### BRIEF DESCRIPTION OF THE DRAWINGS

[FIG. 1] is a circuit diagram showing a configuration of an isolation trap circuit of the present invention;
[FIG. 2] is a circuit diagram showing a configuration of an antenna switch module of the present invention;
[FIG. 3] is a block diagram showing a configuration of a transmission circuit of the present invention and a conventional transmission circuit;
[FIG. 4] is a characteristic diagram showing isolation of antenna switch modules of the present invention and a conventional antenna switch module;
[FIG. 5] is a circuit diagram showing a configuration of a conventional isolation trap circuit; and
[FIG. 6] is a circuit diagram showing a configuration of a conventional antenna switch module.

### BEST MODE FOR CARRYING OUT THE INVENTION

An embodiment of the present invention will be specifically described below with reference to the drawings.
(Example 1)
An antenna switch module of the present invention is modularized as a whole using a laminated ceramic substrate, and capable of transmitting and receiving signals of the triple bands of DCS, PCS, and EGSM, i.e., three communication systems.

As shown in FIG. 2, a diplexer 3 is connected to an antenna connecting terminal 21 of the antenna switch module 2. A first circuit 8 of a low-frequency circuit and a second circuit 9 of a high-frequency circuit are connected in parallel to the diplexer 3. In the first circuit 8, a low-frequency SAW filter 41 and a low-frequency low-pass filter 42 are connected in parallel to a low-frequency switching circuit 4. A received signal Rxe of EGSM is output from the low-frequency SAW filter 41, while a transmission signal Txe of EGSM is fed to the low-frequency low-pass filter 42. The low-frequency switching circuit 4 is provided with a low-frequency isolation trap circuit 43 including a PIN diode 44, an inductor 45, a capacitor 46, and a capacitor 47.

In the second circuit 9, a high-frequency SAW filter 51, a triple-band adaptive circuit 6, and a high-frequency low-pass filter 52 are connected in parallel to a high-frequency switching circuit 5. A received signal Rxd of DCS is output from the high-frequency SAW filter 51, and a received signal Rxp of PCS is output from the triple-band adaptive circuit 6. A transmission signal Txdp of DCS or PCS is fed to the high-frequency low-pass filter 52. The high-frequency switching circuit 5 is provided with a high-frequency isolation trap circuit 53 including a PIN diode 54, an inductor 55, a capacitor 56, and a capacitor 57.

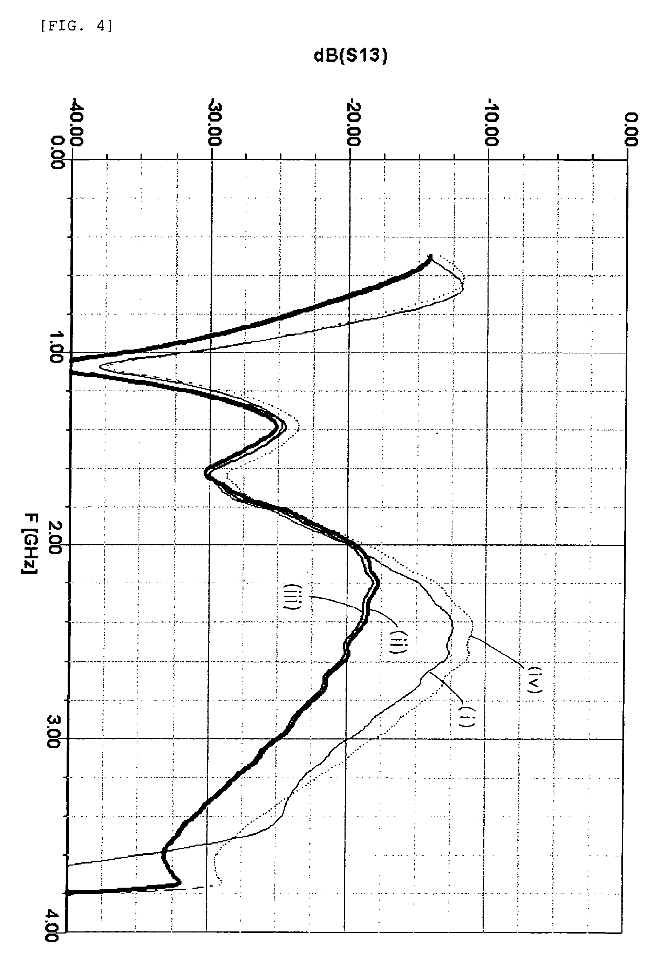

A configuration of the high-frequency isolation trap circuit 53 is described with reference to FIG. 1. A PIN diode PD and an inductor L are connected in parallel to a first terminal 61, and a capacitor C1 is connected in series to the inductor L, while the PIN diode PD and the capacitor C1 are connected in parallel to a second terminal 62. A capacitor C2 is further connected and grounded between the first terminal 61 and the inductor L, or between the inductor L and the capacitor C1, or between the capacitor C1 and the second terminal 62. With constants of the high-frequency isolation trap circuit 53 fixed to 22 nH for the inductor L, 56 pF for the capacitor C1, and 1.5 pF for the capacitor C2, prototypes were made with the capacitor C2 connected and grounded (i) between the first terminal 61 and the inductor L, (ii) between the inductor L and the capacitor C1, and (iii) between the capacitor C1 and the second terminal 62, as well as a conventional example for comparison (iv) without the capacitor C2 connected therein. Each circuit of the prototypes was measured for isolation in a signal path from Tx of DCS/PCS to an antenna 1. FIG. 4 shows the results. As seen, FIG. 1 illustrates the prototype (ii) having the capacitor C2 connected and grounded between the inductor L and the capacitor C1. In FIG. 4, each of (i)-(iv) indicates respective isolation in the prototypes (i)-(iv). As seen in FIG. 4, isolation in a band of 2.0-3.5 GHz including higher harmonics 3f₀ (2.64-2.75 GHz) of an EGSM signal is preferable in order of (iii) ≥ (ii) > (i) > (iv), and is improved by approximately 1-8 dB relative to the conventional example (iv). Although (iii) and (ii) are approximately same in isolation, (ii) is more preferable because of less mismatching of (ii) than (iii).

Detailed data is not shown, but a comparable effect was able to be obtained in an isolation measurement result in a signal path from Tx of EGSM to the antenna 1.

In the above-described antenna switch module of the present invention, a capacitor C2 is connected and grounded between the first terminal 61 and the inductor L, or between the inductor L and the capacitor C1, or between the capacitor C1 and the second terminal 62. Therefore, even if higher harmonics of a signal of one band leak into the antenna switch module ASM through a signal path of another band, the isolation trap circuit provided in a switching circuit of the another band can suppress the higher harmonics of the signal of the one band.

In a transmission circuit including a dual amp, a level of higher harmonics of a signal of one band leaking from the dual amp into the antenna switch module ASM through a signal path of another band becomes great. However, if the above-described antenna switch module of the present invention is provided in the transmission circuit, the isolation trap circuit can suppress the higher harmonics of the signal of the one band.

An embodiment of the present invention is specifically described above by way of an example, but the present invention is not limited to the example. For example, while the example shows an antenna switch module adaptive to three bands, there is also of course a comparative effect when the isolation trap circuit is provided with an antenna switch module handling transmission and reception signals of two or four bands (i.e., communication systems) or more. Furthermore, the antenna switch module may include a substrate made of a resin such as glass epoxy other than a laminated ceramic substrate, and may be any material.

## Claims

1. An isolation trap circuit in which a PIN diode PD and an inductor L are connected in parallel to a first terminal 61, and a capacitor C1 is connected in series to the inductor L, while the PIN diode PD and the capacitor C1 are connected in parallel to a second terminal 62, the isolation trap circuit being **characterized in that** a capacitor C2 is further connected and grounded between the first terminal 61 and the inductor L, or between the inductor L and the capacitor C1, or between the capacitor C1 and the second terminal 62.

2. An isolation trap circuit in which a PIN diode PD and an inductor L are connected in parallel to a first terminal 61, and a capacitor C1 is connected in series to the inductor L, while the PIN diode PD and the capacitor C1 are connected in parallel to a second terminal 62, the isolation trap circuit being **characterized in that** a capacitor C2 is further connected and grounded between the inductor L and the capacitor C1.

3. An antenna switch module included in a portable terminal device used in a plurality of communication systems, comprising:
a first circuit for transmitting a transmission signal of a first communication system, a second circuit for transmitting a transmission signal of a second communication system, and a diplexer to be provided between the first circuit, the second circuit, and an antenna, the antenna switch module being **characterized in that** the isolation trap circuit according to claim 1 is provided in the first circuit and/or the second circuit.

4. An antenna switch module included in a portable terminal device used in a plurality of communication systems, comprising:
a first circuit for transmitting a transmission signal of a first communication system and for receiving a reception signal of the first communication system, a second circuit for transmitting a transmission signal of a second communication system and for receiving a reception signal of the second communication system, and a diplexer to be provided between the first circuit, the second circuit, and an antenna, the antenna switch module being **characterized in that** the isolation trap circuit according to claim 1 is provided in the first circuit and/or the second circuit.

5. A transmission circuit comprising a dual power amp for amplifying the first transmission signal and the second transmission signal, and the antenna switch module according to claim 3.
